# FASCICULE DE BREVET EUROPEEN

(11) **EP 0 776 785 B1**
(45) Date de publication et mention de la délivrance du brevet: **23.05.2001**
(21) Numéro de dépôt: 96118616.0
(22) Date de dépôt: 20.11.1996
(51) Int. Cl.: B60N 3/14

(54) **Bouchon amovible d'allume-cigares, notamment pour véhicule automobile**
Entfernbarer Zigarrenanzündereinsatz für Kraftfahrzeuge
Removable plug for cigar lighter in particular for motor vehicles

(30) Priorité: 28.11.1995 FR 9514288
(43) Date de publication de la demande: 04.06.1997
(73) Titulaire: VALEO VISION, 93000 Bobigny (FR)
(72) Inventeur: Texier, Gérard, 81200 Mazamet (FR)
(74) Mandataire: Lemaire, Marc

(56) Documents cités:
- FR-A- 2 037 155
- FR-A- 2 320 206
- GB-A- 2 038 466
- US-A- 5 144 111

## Description

La présente invention concerne un bouchon amovible d'allume-cigares, notamment pour véhicules automobiles selon le préambule de la revendication 1.

Un tel bouchon comporte une coupelle servant de réceptacle à un corps de chauffage et appartenant à une partie mobile soumise à l'action d'un ressort de rappel.

Ce bouchon est propre à être logé à l'intérieur d'un corps d'allumage doté de pièces d'alimentation électrique, reliées aux bornes d'une source de tension, et d'un bilame dont les extrémités en forme de crochets sont destinées à retenir la coupelle du bouchon lorsque celui-ci est en position enfoncée de chauffage.

Un circuit électrique est alors établi ce qui permet de chauffer le corps de chauffage.

Les lames du bilame s'échauffent alors et s'incurvent sous l'effet de la chaleur.

A partir d'une température déterminée atteinte par le corps de chauffage la coupelle est libérée du bilame sous l'action du ressort de rappel. Le bouchon occupe alors, après chauffage, une position dite de sortie. Il ne reste plus à l'usager qu'à extraire le bouchon du corps d'allumage, formant prise de courant, pour allumer son cigare ou sa cigarette.

Le bouchon chauffant monté dans son corps d'allumage est propre ainsi à occuper trois positions à savoir une position normale, une position enfoncée de chauffage et une position de sortie.

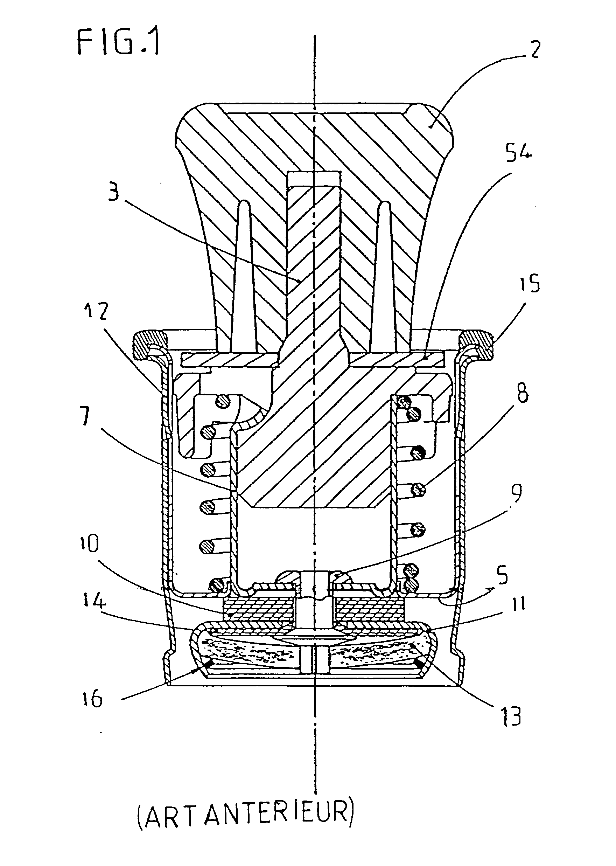

Pour ce faire (figure 1) le bouchon chauffant comporte une partie mobile 2,3,7,9,10,11,13,14,16 logée en partie à l'intérieur d'une partie de guidage 5,12,15. La partie mobile est montée mobile axialement par rapport à la partie de guidage 5,12,15 à l'encontre d'un ressort de rappel 8 agissant entre lesdites parties coaxiales.

La partie mobile comporte elle-même deux parties à savoir, d'une part, une partie électriquement isolante 2,3 de préhension en deux pièces 2,3 avec une bague de décoration 54 interposée entre celles-ci, et, d'autre part, une partie électriquement conductrice appartenant au circuit électrique de l'allume-cigares et comportant un support 7 métallique tubulaire avec un fond troué Ainsi grâce à l'invention, pour passage du corps d'un rivet 9 de fixation de la coupelle 11 au support 7.

Ce rivet 9 traverse également une rondelle électriquement isolante 10 interposée entre les fonds du support 7 et de la coupelle 11 logeant intérieurement un corps de chauffage 13 sous forme d'une résistance électrique chauffante enroulée en spirale.

Pour ce faire l'extrémité du rivet 9 présente une protubérance annulaire formant le pied du rivet 9. Cette protubérance est destinée à déformer la partie centrale d'une rondelle électriquement isolante 14 pour isoler la coupelle 11 du rivet 9.

La spire d'extrémité interne de la résistance 13 est engagée dans une fente d'une partie cylindrique, que présente le rivet 9 au-delà de sa protubérance servant également au centrage de la coupelle 11.

La spire d'extrémité externe de la résistance 13 est au contact du bord latéral de la coupelle 11 déformé à son extrémité libre pour retenir un anneau de blocage 16 permettant un serrage de la résistance 13 et de la rondelle 14 entre le fond de la coupelle 11 et ledit anneau 16. Le support 7 de la coupelle 11 est en forme de tube à l'intérieur duquel s'engage un noyau de centrage appartenant à la pièce isolante 3 conformée pour servir d'appui à l'une des extrémités du ressort de rappel 8.

Le support 7 est solidaire par sertissage du noyau de la pièce 3 doté d'une queue pour assemblage du bouton de préhension 2 isolant avec interposition de la rondelle 54 précitée.

La partie de guidage 5,12,15 comporte deux pièces métalliques 5,12 dont l'une dite douille de guidage 5 est solidaire par surmoulage d'un anneau 15 en matière électriquement isolante.

Cette douille 5 est en contact intime avec l'alésage interne de l'autre pièce 12 formant pare-cendres car elle entoure la coupelle 11 lorsque le bouchon est en position de sortie précitée.

Le pare-cendres 12 est donc globalement de forme tubulaire en étant propre à venir en contact intime avec l'alésage interne du corps d'allumage. Le pare-cendres 12 sert donc également de centreur au bouchon.

Un mouvement relatif est permis entre le pare-cendres 12 et la douille 5, grâce à des ouvertures pratiquées dans la douille 5 et à des pattes inclinées du pare-cendres 12 pénétrant dans lesdites ouvertures.

La douille 5 est donc montée de manière télescopique par rapport au pare-cendres 12.

Cette douille 5 présente un fond, pour appui d'une extrémité du ressort 8. Ce fond présente une ouverture centrale délimitée par une cheminée cylindrique de guidage, dont l'alésage interne est destiné à venir en contact intime avec la périphérie externe du support 7 pour guider celui-ci axialement.

La cheminée est dirigée axialement en direction du bouton 2, c'est-à-dire en direction opposée à la rondelle 10.

En position de chauffage le ressort 8 est donc comprimé entre ledit fond et un épaulement de la pièce isolante 3.

La partie de guidage 5,12,15 présente donc une portion d'appui d'orientation transversale en étant dirigée radialement vers l'intérieur c'est-à-dire vers l'axe de symétrie axiale du bouchon, pour le ressort 8, et une portion cylindrique creuse de guidage, d'orientation axiale, pour le support 7, ladite portion de guidage prolongeant axialement centralement la portion d'appui.

Un tel bouchon donne satisfaction car il est économique.

La Demanderesse néanmoins s'est demandé s'il n'était pas possible de diminuer la longueur du pare-cendres.

Pour ce faire on peut songer à adopter une solution du type de celle décrite dans le document FR-A-2 320 206 conforme au préambule de la revendication 1.

Dans ce document le pare-cendres est fixé en bout d'un tube porteur électriquement isolant portant à son autre extrémité, en saillie radiale, un anneau. Le support est en forme de tige ancrée par moletage dans le bouton de préhension et l'extrémité de la tige filetée pour montage de la coupelle.

Cette solution donne satisfaction, néanmoins le pare-cendres n'est pas aussi simple que souhaité, car il présente des ouvertures pour le guidage d'une rondelle mobile servant d'appui au ressort de rappel et est encore d'une longueur importante.

La présente invention a pour objet, de manière économique, de diminuer encore la longueur du pare-cendres et de simplifier celui-ci.

Suivant l'invention un bouchon chauffant dudit type est caractérisé en ce que ladite portion d'appui et ladite portion cylindrique creuse de guidage sont d'un seul tenant avec le pare-cendres.

Grâce à l'invention le pare-cendres a une longueur encore réduite et présente deux fonctions supplémentaires à savoir une fonction d'appui pour l'extrémité concernée du ressort de rappel et une fonction de guidage pour le support dont le fond porte la coupelle de réception du corps de chauffage.

Ainsi la partie de guidage ne comporte qu'une seule pièce métallique robuste du fait que le pare-cendres est dépourvu d'ouvertures de guidage pour une pièce appartenant à la partie mobile. L'absence d'ouvertures permet de diminuer la longueur du pare-cendres. Une meilleure liaison électrique est obtenue entre le support et le pare-cendres du fait de l'absence de pièce supplémentaire mobile. Le bouchon est compact axialement et radialement.

D'une manière générale on supprime le montage télescopique des solutions de l'art antérieur en sorte que les positions de sortie et normale du bouchon sont confondues, la partie de guidage étant une partie fixe. Une bonne protection est ainsi assurée lorsque le bouchon est extrait, l'usager ne risque pas d'être brûlé par le corps de chauffage et les cendres ne risquent pas de s'échapper du fait que le pare-cendres est fermé.

Tout ceci rend économique le bouchon d'autant plus que la partie électriquement conductrice de la partie mobile du mode de réalisation de la figure 1 peut être conservée au bénéfice d'une réduction des coûts.

Le support de la coupelle peut être en forme de tige comme dans le document FR-A-2 320 206 ou être de forme tubulaire.

Dans ce dernier cas la présence du tube porteur permet de diminuer le diamètre externe de la partie électriquement isolante de préhension et permet de rendre plus économique la fabrication de celle-ci. Grâce à cela cette partie isolante de préhension peut se réduire au seul bouton de préhension usuellement en matière plastique moulable, ledit bouton servant de noyau centreur au support tubulaire de coupelle.

Ainsi on peut conformer ce bouton pour qu'il présente une rainure de logement de l'extrémité du ressort de rappel et qu'il vienne en contact intime avec l'alésage interne du tube porteur. Ainsi la partie mobile est bien guidée.

Par rapport à la solution décrite dans le document FR-A-2 320 206, on diminue le diamètre du bouchon et notamment du pare-cendres car celui-ci est dépourvu de languettes de retenue et d'ouvertures de guidage.

Le tube porteur est avantageusement extérieurement de diamètre étagé en présentant au voisinage de son anneau une zone de diamètre supérieur pour venir en contact intime avec l'alésage interne du corps d'allumage pour un bon centrage de la partie de guidage du bouchon. L'autre zone de diamètre inférieur sert à la fixation du pare-cendres.

Pour réaliser la fixation par encliquetage, le pare-cendres comporte avantageusement des pattes crantées élastiquement déformables engagées dans des ouvertures du tube porteur. L'extrémité libre du tube porteur coopère avec la portion d'appui en sorte que l'on obtient une fixation sûre, rapide et économique grâce aux pattes crantées, le tube porteur étant emprisonné entre lesdites pattes et ladite portion d'appui.

On appréciera que la portion d'appui du pare-cendres sert de butée à la rondelle isolante et donc la partie mobile.

Cette rondelle a ainsi une fonction supplémentaire et limite la déformation du pare-cendres sous l'action du ressort de rappel.

Ainsi on peut extraire aisément le bouchon du corps d'allumage sans accroître la longueur axiale du bouchon.

D'une manière générale la portion d'appui sert de butée à la partie mobile.

Ainsi le support peut être de diamètre étagé, sa portion de plus grand diamètre étant adaptée à coopérer avec la face de la portion d'appui tournée à l'opposé du ressort de rappel sollicitant le support en direction de la portion d'appui.

Le support tubulaire peut être fixé directement sur le bouton (sur un noyau central de celui-ci) par agrafage ou encliquetage, le support présentant des pattes de retenue inclinées logées à serrage dans des creusures de fixation réalisées dans le bouton.

Les pattes inclinées peuvent être réalisées par avance ce qui permet un montage par encliquetage. En variante elles sont repoussées en final dans les creusures pour un montage par agrafage du support sur le noyau central du bouton.

Ainsi, grâce à l'invention, on obtient un bouchon encore plus économique et d'un montage aisé tout en ayant des pièces du type standard de la figure 1.

De plus on tire parti des pièces existantes pour leur faire remplir une fonction supplémentaire.

On réduit la longueur du pare-cendres et le nombre de pièces de la partie de guidage.

L'épaisseur du tube porteur n'est pas un handicap. En effet ce tube est plus épais que la douille de guidage de l'art antérieur, mais cela permet de supprimer l'une des pièces de la partie isolante de préhension (ou de saisie) se réduisant alors au seul bouton de préhension (ou de saisie) remplissant des fonctions supplémentaires obtenues aisément par moulage. Grâce à l'épaisseur du tube on peut étager extérieurement celui-ci en diamètre de sorte que l'on peut former une zone de centrage à la faveur de la zone la plus épaisse et réaliser la fixation par encliquetage du pare-cendres à la faveur de la zone la moins épaisse. On appréciera qu'un bon circuit électrique est obtenu puisque le pare-cendres est en contact direct avec le support.

La diminution du nombre de pièces entraîne que le bouchon est plus robuste et d'un fonctionnement plus fiable, les risques de coincement étant diminués du fait notamment de la suppression du montage télescopique dans la partie de guidage.

La description qui va suivre illustre l'invention en regard des dessins annexés dans lesquels :
- la figure 1 est une vue en coupe axiale d'un bouchon amovible d'allume-cigares de l'art antérieur ;
- la figure 2 est une vue en coupe axiale du bouchon amovible d'allume-cigares selon l'invention avec représentation partielle de la douille d'allumage, le bouchon étant globalement en position enfoncée de chauffage dans la partie gauche de cette figure et globalement en position normale ou de sortie dans la partie droite de cette figure.

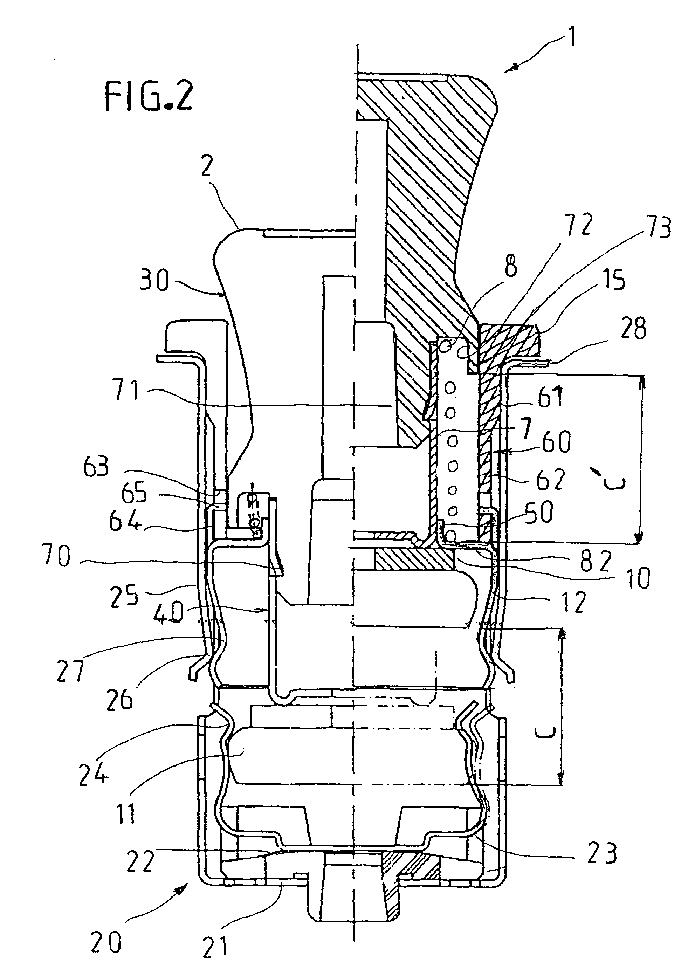

A la figure 2 les éléments communs à l'invention et à l'art antérieur de la figure 1 seront affectés des mêmes signes de référence. Dans cette figure on a représenté ici de manière schématique la douille d'allumage 20 du corps d'allumage servant de réceptacle au bouchon chauffant amovible 1 selon l'invention.

Pour mémoire on rappellera que le corps d'allumage est destiné à être fixé de manière directe ou indirecte à une paroi fixe du véhicule telle qu'une console ou la planche de bord de celui-ci.

Usuellement cette fixation est réalisée à l'aide d'une bague éclairante (non représentée) entourant la douille d'allumage 20 présentant à son extrémité ouverte une collerette 28 destinée à prendre appui sur la face avant de la paroi précitée ou sur la face avant d'un anneau lumineux que présente la bague éclairante selon que la douille 20, qui traverse une ouverture de ladite paroi, est montée directement ou indirectement sur la paroi. A son autre extrémité la douille 20 présente un fond 21 troué centralement pour passage du nez d'une rondelle électriquement isolante 22 interposée entre le fond 21 et la base d'un bilame 23.

Les lames du bilame 23 s'étendent axialement en direction de l'extrémité ouverte de la douille 20 et présentent chacune à leur extrémité libre un crochet 24. Ces crochets 24 sont tournés l'un vers l'autre pour retenir la coupelle 11 lorsque le bouchon 1 est en position enfoncée de chauffage (partie gauche de la figure 2). Dans cette position, de manière connue, un circuit électrique est établi à l'aide d'une première pièce d'alimentation électrique connectée à l'une des bornes de la batterie, d'un organe de fixation, du bilame 23, du support 7, du pare-cendres 12 de la douille 20 et d'une seconde pièce d'alimentation électrique reliée au fond 21 de la douille 20 électriquement conductrice, ladite pièce étant connectée à l'autre borne de la batterie.

Par simplicité on n'a pas représenté à la figure 2 l'organe de fixation du bilame 23 ni les pièces d'alimentation électriques, sachant qu'une rondelle isolante de connexion est interposée entre les deuxdites pièces d'alimentation. Ces pièces ne font pas partie de l'invention.

On rappellera que l'organe de fixation, par exemple une vis dont la tête prend appui sur la face supérieure de la base du bilame 23, sert à l'assemblage de part et d'autre du fond 21 du bilame 23, des pièces d'alimentation électriques et des pièces isolantes.

Par contre on notera que la douille 20, en tôle emboutie, présente venue de découpe deux languettes de retenue 25 avec chacune un bec 26 à section en forme de V pour coopérer avec un renforcement 27 annulaire complémentaire que présente en vis-à-vis le pare-cendres 12 à son extrémité libre afin de retenir le bouchon 1. Les languettes 25 sont élastiquement déformables pour notamment extraction du bouchon chauffant et allumer une cigarette. Dans cette position extraite, le pare-cendres entoure la coupelle 11 et fait saillie axialement par rapport à celle-ci pour éviter que l'usager ne se brûle en touchant la coupelle alors chaude ou que des cendres s'échappent.

Il en est de même lorsque le bouchon 1 est en position normale. Par contre, en position de chauffage, le pare-cendres n'entoure plus la coupelle 11 et est à distance de celle-ci.

Comme à la figure 1, le bouchon 1 comporte deux parties coaxiales montées mobiles l'une par rapport à l'autre à l'encontre d'un ressort de rappel 8, ici du type ressort à boudin, entourant le support tubulaire 7 à fond de fixation de la coupelle 11.

Ici l'une des parties, à savoir la partie de guidage 12,60 ne comporte grâce à l'invention qu'une pièce métallique 12 de manière décrite ci-après.

La partie mobile 30, logée normalement en partie à l'intérieur de la partie de guidage, comporte elle-même une partie électriquement isolante 2 de préhension et une partie électriquement conductrice 40 portée par la partie électriquement isolante 2.

Plus précisément la partie électrique 40 appartient au circuit électrique de l'allume-cigares et est identique à celle de la figure 1.

Seul ici le support métallique 7, de forme tubulaire, la rondelle isolante 10 et la coupelle 11 ont été représentés.

Pour les autres composants, rivet - résistance électrique chauffante - rondelle isolante - anneau de blocage on se reportera à la figure 1, sachant que la tête du rivet de fixation est sertie au contact du fond du support 7 tubulaire porté par la partie électriquement isolante 2, ledit fond portant la coupelle 11.

Plus précisément le support 7 est assemblé par agrafage ou encliquetage en 70 ici directement au bouton de préhension 2 en matière électriquement et thermiquement isolante constituant dans cette figure la seule pièce de la partie isolante précitée en étant dotée d'un noyau central 71 emmanché dans le support 7.

Ce support 7 comporte pour ce faire des pattes de retenue inclinées, ici au nombre de trois, réparties régulièrement circonférentiellement, engagées à serrage chacune dans une creusure de fixation pratiquée dans le noyau central 71 du bouton 2, ici centralement creux pour faciliter sa fabrication par moulage. Chaque creusure comporte un flanc incliné, de forme complémentaire aux pattes inclinées, raccordé à un flanc de butée ou de blocage d'orientation transversal.

Les pattes inclinées étant formées par avance, le montage peut se faire par emmanchement à force du noyau 71 à l'intérieur du support 7 conduisant à un encliquetage réalisé grâce notamment au chanfrein d'extrémité que comporte le noyau 71. En variante on emmanche le noyau 71 dans le support puis on rabat les pattes de retenue dans leur creusure associée. On réalise ainsi un agrafage.

Une rainure annulaire 72 est ménagée dans la zone d'enracinement du noyau central 71 à la partie principale du bouton 2.

Cette rainure sert de logement et à l'appui (de siège) de la spire d'extrémité concernée du ressort de rappel 8 entourant le support 7.

Bien entendu une rondelle métallique de contact peut être interposée entre le fond de la rainure 72 et l'extrémité du ressort 8, le noyau 71 étant protégé par le support métallique 7. En variante cette rondelle peut être remplacée par une collerette issue du support 7. En variante, par son durcissement, le fond de cette rainure peut être revêtu d'une couche métallique.

L'autre extrémité du ressort 8 s'appuie sur une portion d'appui 82 appartenant à la partie de guidage 12,50. Cette portion d'appui 82 est globalement d'orientation transversale. Elle est dirigée radialement vers le centre en étant trouée centralement. La partie de guidage comporte également une portion cylindrique creuse de guidage 50 pour le support 7, dont la périphérie externe est en contact intime avec l'alésage interne de la partie de guidage 50. Cette portion 50 prolonge centralement la portion d'appui 82 et s'érige donc à partir de l'ouverture centrale de la portion d'appui 82 et ce axialement en direction du bouton 2 (en direction opposée à la rondelle 10). Elle est en forme de cheminée cylindrique d'orientation axiale. La partie de guidage comporte également un anneau 15.

Plus précisément dans le but de réduire encore la longueur du pare-cendres et de rendre plus économique le bouchon, un bouchon chauffant 1 du type sus-indiqué est caractérisé en ce que ladite portion d'appui 82 et ladite portion de guidage 50 sont d'un seul tenant avec le pare-cendres 12. Le pare-cendres 12 est fixé en bout d'un tube porteur 60 électriquement isolant portant à son autre extrémité en saillie radiale l'anneau 15.

Ici l'anneau 15 est d'un seul tenant avec le tube porteur 60, avantageusement en matière plastique moulable électriquement et thermiquement isolante. La partie de guidage ne comporte ainsi que deux pièces.

En variante, par exemple pour des raisons esthétiques, l'anneau 15 peut être rapporté sur le tube 60 en étant métallique ou avantageusement en matière électriquement isolante.

Ici le pare-cendres 12 est fixé par encliquetage sur le tube porteur isolant 60. Plus précisément le tube 60 présente en bout (à son extrémité dorsale opposée à celle portant l'anneau 15) des ouvertures 63 et le pare-cendres 12 des pattes 64 élastiquement déformables avec des crans 65 pénétrant, après encliquetage, chacun dans une ouverture 63 de largeur complémentaire, les ouvertures 63 étant plus longues pour permettre l'encliquetage en toute sûreté. Le nombre de pattes 64 et d'ouvertures 63 dépend des applications, ici trois pattes 64 et trois ouvertures 63 sont prévues. Les pattes 64 sont d'orientation axiale, elles sont en contact avec la périphérie externe du tube 60, en étant dirigées vers l'anneau 15. Les crans 65 consistent ici en un pli à 90°.

Les pattes 64 ont donc en section une forme d'équerre. Bien entendu les crans peuvent consister en des emboutis, en des crochets, becs ou autres. Les pattes 64,65 sont issues de matière par pliage et découpe de la portion d'appui 82 du pare-cendres 12. Bien entendu on peut procéder à un autre mode de fixation par exemple un surmoulage, un agrafage, par exemple les plis 65 étant réalisés en final à la faveur des ouvertures 63. Ainsi l'extrémité arrière (le bout) du tube 60 est pincée entre les crans 65 et la portion d'appui 82.

On appréciera que la rondelle 10, de diamètre externe supérieur à celui du support 7, vient sous l'action du ressort de rappel 8 en butée dans un sens contre la portion d'appui 82, ladite rondelle étant soutenue par la coupelle 11 de diamètre externe supérieur à celui de la rondelle 10.

Ainsi on peut extraire aisément le bouchon du corps d'allumage du fait que la rondelle 10 est en contact avec la face de la portion d'appui 82 tournée vers la coupelle 11.

On notera, de manière connue, que le support 7 présente un fond avec un bourrelet annulaire pour contact local avec la rondelle 10.

Le tube 60 est extérieurement de diamètre étagé et comporte à son extrémité avant (au voisinage de l'anneau 15, une première zone d'épaisseur plus importante propre à coopérer en contact intime avec la périphérie interne de la douille 20 et une deuxième zone moins épaisse 62 dotée des ouvertures 63. Grâce à cette partie 62, on peut loger les pattes 64 entre la périphérie interne de la douille 20 et la périphérie externe du tube 60.

Ainsi la partie de guidage 12,60 en deux pièces comporte deux zones de centrage 61,12 pour centrage du bouchon à l'intérieur de la douille 20. Ces zones sont décalées axialement l'une par rapport à l'autre.

Par ailleurs le bouton 2 présente une paroi tubulaire 73 délimitant extérieurement la rainure 72. Cette paroi 73 est en contact intime par sa périphérie externe avec l'alésage interne du tube porteur 60. La paroi 73 est donc également une paroi de centrage de la partie mobile 30 du bouchon 1 en liaison avec la cheminée 50. Ainsi le tube 60 guide le bouton 2 et la partie de guidage 12,60 comporte deux portions de guidage 60,50 pour la partie mobile 30, tandis que la douille 20 guide la partie de guidage 12,60 présentant pour ce faire deux zones de centrage 61,12.

On notera qu'ici on a représenté un léger jeu entre l'anneau 15 et la collerette d'extrémité 28 de la douille 20. En réalité l'anneau 15 est propre à venir en butée contre la collerette 28 en sorte que les becs 26 des languettes de retenue 25 de la douille 20 sont en prise avec le renfoncement complémentaire 27 de la coupelle 11 pour les positions normales, de sortie et de chauffage. Les languettes 25 se déploient lors de l'introduction et de l'extraction du bouchon 1 respectivement dans et hors du corps d'allumage. On notera que le renfoncement 27 est de forme annulaire et qu'il est délimité par un bourrelet d'extrémité permettant l'expansion des languettes 25 et de retenir les cendres. La partie de guidage 12,60 est donc une partie fixe, la position du bouchon étant identique lorsqu'il est en position normale ou de sortie.

La longueur du pare-cendres, globalement de forme tubulaire, est suffisante pour que celui-ci joue son rôle et entoure la coupelle 11 en faisant saillie axialement par rapport à celle-ci dans les positions normale et de sortie du bouchon 1, et ce en toute sécurité car, contrairement aux solutions décrites dans le document FR-A-2 320 206, aucune rondelle mobile n'est utilisée.

On appréciera que la cheminée 50 rigidifie la portion d'appui 82 venant en butée contre la rondelle 10 sous l'action du ressort 8. Ainsi le pare--cendres est en forme de cuvette avec un fond rigidifié par une cheminée 50 saillante axialement.

Le pare-cendres 12 et la cheminée 50 s'étendent axialement de part et d'autre de la portion d'appui 82.

En variante, bien que cela rallonge la longueur du bouchon, la cheminée 50 peut être dirigée axialement dans l'autre sens.

Bien entendu la course C, effectuée par la coupelle 11 entre les positions de chauffage et normale ou de sortie du bouchon, est inférieure à la distance C' entre la portion d'appui 82 et l'extrémité de la paroi 73 lorsque le bouchon est en position normale ou de sortie. Ici les distances C et C' sont sensiblement égales, C ' étant légèrement supérieur à C pour tenir comporte des tolérances de fabrication.

Le mouvement relatif entre les parties de guidage et mobile est limité par venue à spires jointives du ressort 8 électriquement conducteur.

On appréciera que le bouchon est robuste du fait notamment que le pare-cendres lui-même est dépourvu d'ouvertures et que sa partie mobile est bien guidée. La partie fixe 12,60 est également bien guidée et centrée par la douille 20.

On obtient ainsi un bon fonctionnement du bouchon sans risque de coincement pour sa partie mobile 30. En outre une meilleure liaison électrique est obtenue entre le support 7 et la douille 20 du fait que cette liaison ne fait appel qu'à une seule pièce à savoir le pare-cendres.

Bien entendu la présente invention n'est pas limitée à l'exemple de réalisation décrit. En particulier le ressort 8, du type ressort à boudin dans les figures, peut être d'un autre type par exemple un empilage de rondelles Belleville. Ici les pièces cylindriques sont à section circulaire. Bien entendu en variante elles peuvent être de section rectangulaire par exemple de section carrée.

Le bouton 2 peut pénétrer plus profondément dans la partie de guidage 12,60 et être logée complètement à l'intérieur de celle-ci lorsque le bouchon est en position de chauffage. Quoiqu'il en soit la partie mobile 30 est logée en partie dans la partie de guidage 12,60 pour les positions normale (ou d'attente) et de sortie (ou de saisie) du bouchon. Ainsi la partie 30 est logée normalement en partie dans la partie de guidage 12,60.

Bien entendu, par exemple pour des questions de style, rien n'empêche de diviser le bouton 2 en deux parties.

D'une manière générale la partie isolante de préhension peut comporter deux pièces comme dans l'art antérieur.

La fixation du support 7 sur le noyau 71 du bouton 2 peut être réalisée par tous moyens appropriés par exemple par collage, ou emmanchement à force, le noyau présentant des crans engagés dans des ouvertures du support.

La portion cylindrique creuse de guidage 50 peut être fragmentée en pattes axiales pour un meilleur contact électrique avec le support 7.

On notera, en position de chauffage, que la portion de guidage 50, de faible longueur, pénètre dans la rainure 72.

Le corps de chauffage 13 n'est pas forcément une résistance enroulée en spirale. Il peut s'agir par exemple d'une résistance solide constituée par du dioxyde d'étain recouvrant un support céramique par exemple à base de nitrure de silicium ou d'alumine.

Bien entendu le tube porteur 60 peut être de diamètre uniforme. Dans ce cas le tube présente toujours les ouvertures 63 et les pattes 64, d'orientation axiale, sont en contact avec l'alésage interne du tube, les crans 65 étant alors dirigés vers la douille 20.

Le support 7 peut être en forme de tige. Ce support peut être étagé en diamètre en sorte que sa partie de plus grand diamètre peut coopérer avec la portion d'appui 82 de la même manière que la rondelle 10.

## Revendications

1. Bouchon amovible d'allume-cigares, notamment pour véhicules automobiles, du genre comportant une partie de guidage (12,60) munie d'un pare-cendres (12) globalement de forme tubulaire, une partie mobile (30) logée normalement en partie à l'intérieur de la partie de guidage (12,60) et comprenant une partie électriquement isolante (2) de préhension portant un support (7) pour support d'une coupelle (11) propre à être entourée par le pare-cendres (12) et servant de réceptacle à un corps de chauffage (13), dans lequel un ressort de rappel (8) entoure ledit support (7) et prend appui à l'une de ses extrémités sur la partie électriquement isolante (2) et à son autre extrémité sur une portion d'appui (82), globalement d'orientation transversale en étant dirigée radialement vers l'intérieur, et dans lequel la portion d'appui (82) est prolongée centralement par une portion cylindrique creuse de guidage (50), d'orientation axiale, pour ledit support (7), le pare-cendres (12) étant fixé par encliquetage en bout d'un tube porteur (60) électriquement isolant portant à son autre extrémité en saillie radiale un anneau (15), caractérisé en ce que ladite portion d'appui (82) et ladite portion cylindrique creuse de guidage (50) sont d'un seul tenant avec le pare-cendres (12).

2. Bouchon selon la revendication 1, caractérisé en ce que le pare-cendres (12) comporte des pattes (64) d'orientation axiale avec des crans (65) pénétrant chacun dans une ouverture (63) que présente en bout le tube porteur (60).

3. Bouchon selon la revendication 2, caractérisé en ce que les crans (65) consistent en un pli à 90° en sorte que les pattes (64) ont une forme d'équerre.

4. Bouchon selon la revendication 2 ou 3, caractérisé en ce que le bout du tube porteur (60) est pincé entre les crans (65) et la portion d'appui (82).

5. Bouchon selon l'une quelconque des revendications 1 à 4, caractérisé en ce que le tube porteur (60) est extérieurement de diamètre étagé et présente, d'une part, une zone plus épaisse (62) au voisinage de son anneau (15) propre à servir au centrage du bouchon à l'intérieur d'un corps d'allumage (20) que présente l'allume-cigares pour réception du bouchon, et, d'autre part, une zone moins épaisse (61) servant à la fixation du pare-cendres (12).

6. Bouchon selon l'une des revendications 1 à 5, caractérisé en ce que le support (7) est de forme tubulaire et présente un fond pour support de la coupelle.

7. Bouchon selon la revendication 6, caractérisé en ce que la partie électriquement isolante (2) de préhension du bouchon (1) se réduit à un bouton de préhension (2) portant le tube de support (7) à la faveur d'un noyau central (71) du bouton (2) emmanché dans le support (7).

8. Bouchon selon la revendication 7, caractérisé en ce que le support (7) présente des pattes de retenue inclinées engagées chacune dans une creusure de fixation pratiquée dans le noyau central (71) du bouton (2).

9. Bouchon selon la revendication 7 ou 8, caractérisé en ce que le bouton de préhension (2) présente une rainure annulaire (72) ménagée dans la zone d'enracinement du noyau central (71) à la partie principale du bouton (2) et en ce que cette rainure (72) sert au logement et d'appui à l'extrémité concernée du ressort de rappel (8).

10. Bouchon selon la revendication 9, caractérisé en ce que la paroi (73) délimitant extérieurement la rainure (72) est en contact intime avec l'alésage interne du tube porteur (60).

11. Bouchon selon l'une quelconque des revendications 1 à 10, caractérisé en ce que la portion d'appui (82) sert de butée à ladite paroi mobile.

12. Bouchon selon la revendication 11, dans lequel une rondelle électriquement isolante (10) est interposée entre le fond du support (7) et le fond de la coupelle (11), caractérisé en ce que la portion d'appui (82) du pare-cendres (12) sert de butée à ladite rondelle.

## Patentansprüche

1. Abnehmbares Zigarettenanzünder-Steckteil, insbesondere für Kraftfahrzeuge, mit einem Führungsteil (12, 60), das mit einem insgesamt röhrenförmigen Aschefänger (12) versehen ist, und einem beweglichen Teil (30), das normalerweise zum Teil im Inneren des Führungsteils (12, 60) angeordnet ist und ein elektrisch isolierendes Griffteil (2), das mit einer Abstützung (7) zum Halten eines Schälchens (11) versehen ist, das von dem Aschefänger (12) umgeben sein kann und als Aufnahmebehältnis für ein Heizelement (13) dient, aufweist, in dem eine Rückstellfeder (8) diese Abstützung (7) umgibt und mit ihrem einen Ende auf dem elektrisch isolierenden Teil (2) und mit ihrem anderen Ende auf einem Auflageteil (82) aufliegt, das insgesamt quer und radial nach innen gerichtet ist, und in das das Auflageteil (82) durch ein axial gerichtetes, hohlzylindrisches Führungsteil (50) für die Abstützung (7) zentrisch verlängert ist, wobei der Aschefänger (12) durch Einrasten am Ende eines elektrisch isolierenden Trägerrohres (60) befestigt ist, das an seinem anderen Ende mit einem radial vorstehenden Ring (15) versehen ist,
dadurch gekennzeichnet, dass dieses Auflageteil (82) und dieses hohlzylindrische Führungsteil (50) einstückig mit dem Aschefänger (12) ausgebildet sind.

2. Steckteil nach Anspruch 1,
dadurch gekennzeichnet, dass der Aschefänger (12) axial gerichtete Klammern (64) mit Rasthaken (65) aufweist, die jeweils in eine Öffnung (63) eingreifen, die sich am Ende des Trägerrohres (60) befindet.

3. Steckteil nach Anspruch 2,
dadurch gekennzeichnet, dass die Rasthaken (65) aus einer Abkantung um 90° bestehen, so dass die Klammern (64) eine rechtwinklige Form haben.

4. Steckteil nach Anspruch 2 oder 3,
dadurch gekennzeichnet, dass das Ende des Trägerrohres (60) zwischen die Rasthaken (65) und das Auflageteil (82) geklemmt ist.

5. Steckteil nach einem der Ansprüche 1 bis 4,
dadurch gekennzeichnet, dass das Trägerrohr (60) außen einen stufenförmig angelegten Durchmesser hat und einerseits einen dickeren Bereich (62) in der Nähe des Rings (15) aufweist, der zum Zentrieren des Steckteils im Inneren eines Zündgehäuses (20) dient, das der Zigarettenanzünder zur Aufnahme des Steckteils aufweist, und andererseits einen weniger dicken Bereich (61), der zur Befestigung des Aschefängers (12) dient.

6. Steckteil nach einem der Ansprüche 1 bis 5,
dadurch gekennzeichnet, dass die Abstützung (7) röhrenförmig ist und einen Boden zum Halten des Schälchens aufweist.

7. Steckteil nach Anspruch 6,
dadurch gekennzeichnet, dass sich das elektrisch isolierende Griffteil (2) des Steckteils (1) auf einen Griffknopf (2) beschränkt, der das Trägerrohr (7) mittels eines zentrischen Kernstücks (71) des Knopfes (2) trägt, der in die Abstützung (7) eingesteckt ist.

8. Steckteil nach Anspruch 7,
dadurch gekennzeichnet, dass die Abstützung (7) schräg stehende Halteklammern aufweist, die jeweils in eine Fixierungsausnehmung eingreifen, die in das zentrische Kernstück (71) des Knopfs (2) gearbeitet sind.

9. Steckteil nach Anspruch 7 oder 8,
dadurch gekennzeichnet, dass der Griffknopf (2) eine ringförmige Nut (72) aufweist, die in dem Bereich ausgespart ist, in dem das zentrische Kernstück (71) mit dem Hauptteil des Knopfes (2) verbunden ist, und dass diese Nut (72) zur Aufnahme und als Auflage für das zugehörige Ende der Rückstellfeder (8) dient.

10. Steckteil nach Anspruch 9,
dadurch gekennzeichnet, dass die die Nut (72) außen begrenzende Wand (73) unmittelbar an der inneren Bohrung des Trägerrohres (60) anliegt.

11. Steckteil nach einem der Ansprüche 1 bis 10,
dadurch gekennzeichnet, dass das Auflageteil (82) als Anschlag für diese bewegliche Wand dient.

12. Steckteil nach Anspruch 11, bei dem eine elektrisch isolierende Scheibe (10) zwischen dem Boden der Abstützung (7) und dem Boden des Schälchens (11) liegt,
dadurch gekennzeichnet, dass das Auflageteil (82) des Aschefängers (12) als Anschlag für diese Scheibe dient.

## Claims

1. A removable plug for a cigar lighter, especially for a motor vehicle, of the kind comprising a guide part (12, 60) having a generally tubular fireshield (12), a moving part (30) which is normally lodged partly within the guide part (12, 60), and which comprises an electrically insulating gripping portion (2) carrying a support (7) for supporting an end cup element (11) which is adapted to be surrounded by the fireshield (12) and serves as a receptacle for a heater element (13), wherein a return spring (8) surrounds the said support (7) and bears at one of its ends on the electrically insulating portion (2) and at its other end on a generally transversely oriented abutment portion (82) which is directed radially inwards, and wherein the abutment portion (82) is extended centrally by an axially oriented hollow cylindrical guide portion (50) for the said support (7), the fireshield (12) being snap-fitted at the end of an electrically insulating carrier tube (60) which carries at its other end a radially projecting annular flange (15), characterised in that the said abutment portion (82) and the said hollow cylindrical guide portion (50) are integral with the fireshield (12).

2. A plug according to Claim 1, characterised in that the fireshield (12) has axially oriented lugs (64) with tabs (65), each of which penetrates into an aperture (63) formed in the end of the carrier tube (60).

3. A plug according to Claim 2, characterised in that the tabs (65) consist of a portion bent over at 90° so that the lugs (64) are L-shaped.

4. A plug according to Claim 2 or Claim 3, characterised in that the end of the carrier tube (60) is gripped between the tabs (65) and the abutment portion (82).

5. A plug according to any one of Claims 1 to 4, characterised in that the carrier tube (60) has a stepped outside diameter and comprises, firstly, a thicker zone (62) in the vicinity of its annular flange (15), for the purpose of centring the plug within a lighter body (20) of the cigar lighter for receiving the plug, and secondly, a thinner zone (61) for fastening the fireshield (12).

6. A plug according to one of Claims 1 to 5, characterised in that the support (7) is tubular and has a base for supporting the end cup element.

7. A plug according to Claim 6, characterised in that the electrically insulating gripping portion (2) of the plug (1) comprises a gripping knob (2), which carries the support tube (7) by virtue of a central core portion (71) of the knob (2) being force-fitted in the support (7).

8. A plug according to Claim 7, characterised in that the support (7) has inclined retaining lugs, each of which is engaged in a fastening recess formed in the central core portion (71) of the knob (2).

9. A plug according to Claim 7 or Claim 8, characterised in that the gripping knob (2) has an annular groove (72) formed in the zone in which the central core portion (71) is rooted to the main portion of the knob (2), and in that the said groove (72) serves for the mounting and engagement of the appropriate end of the return spring (8).

10. A plug according to Claim 9, characterised in that the wall (73) which defines the groove (72) externally is in intimate contact with the internal bore of the carrier tube (60).

11. A plug according to any one of Claims 1 to 10, characterised in that the abutment portion (82) serves as an end stop for the said movable wall.

12. A plug according to Claim 11, wherein an electrically insulating washer (10) is interposed between the base of the support (7) and the base of the end cup element (11), characterised in that the abutment portion (82) of the fireshield (12) serves as an abutment for the said washer.
